# EUROPEAN PATENT APPLICATION

(11) **EP 2 182 699 A1**
(43) Date of publication of application: **05.05.2010**
(21) Application number: 09161162.4
(22) Date of filing: 26.05.2009
(51) Int. Cl.: H04L 29/08, H04W 4/00

(54) **Object transmission systems and methods**

(30) Priority: 03.11.2008 TW 97142347
(71) Applicant: HTC Corporation, Taoyuan County 330 (TW)
(72) Inventor: Wang, John C., 330, Taoyuan City, Taoyuan County (TW)
(74) Representative: 2K Patentanwälte Blasberg Kewitz & Reichel

(57) **Abstract**

Object transmission systems and methods are provided. First, a transmission device receives an input of identification data of a reception device. Then, the transmission device obtains an object. After the object is obtained, the transmission device automatically transmits the identification data of the reception device and the object to a server. The server dispatches the object to the reception device according to the identification data of the reception device. After the reception device obtains the object, the object is automatically displayed in the reception device.

## Description

### CROSS REFERENCE TO RELATED APPLICATIONS

This Application claims priority of Taiwan Patent Application No. 97142347, filed on November 3, 2008, the entirety of which is incorporated by reference herein.

### BACKGROUND OF THE INVENTION

### Field of the Invention

The disclosure relates generally to object transmission systems and methods, and, more particularly to systems and methods that automatically upload and share objects to other devices.

### Description of the Related Art

Communication infrastructures suitable for mobile users have now become widely adopted. Due to requirements of performing data-based wireless services over these infrastructures, data-capable bearer services across such infrastructures have been rapidly developed. Based on the data-capable bearer services, various Internet-based services and applications have been developed for mobile users.

Generally, when a mobile user wants to transmit an object, such as an image to other mobile users, the user must manually activate an object transmission function of the mobile device, set email addresses or phone numbers of receivers, and attach the object. The object is then transmitted via a wireless network or a telecommunication network. The transmitted object can be stored in the in-box folder (via e-mail service) or message folder (via MMS service) of the receiver's mobile device. Conventionally, receivers must be substantial manipulated to view the transmitted object. The manipulations may include showing a new mail/message alert, triggering the mail/message application, selecting the new mail/message, opening the new mail/message, and launching software, such as a viewer to browse the object. Additionally, since the receiver may get objects from diverse transmitters, the objects may be stored in more than one folder, and different applications should be launched based on the various types of the objects, thus requiring more complex operations and actions to be performed by the receiver. As described, the manipulations are complex and time-consuming for both transmitters and receivers. Currently, however, no automatic and efficient mechanism is provided for object transmission and reception, thus users are less apt to use the object transmission function of mobile devices.

### BRIEF SUMMARY OF THE INVENTION

Object transmission systems and methods are provided.

An embodiment of an object transmission system includes a transmission device and a server. The transmission device receives an input of identification data of a reception device, and obtains an object. The transmission device automatically transmits the identification data of the reception device and the object to the server. The server dispatches the object to the reception device according to the identification data of the reception device.

In an embodiment of an object transmission method, a transmission device receives an input of identification data of a reception device. Then, the transmission device obtains an object. Thereafter, the transmission device automatically transmits the identification data of the reception device and the object to a server. The server dispatches the object to the reception device according to the identification data of the reception device.

In some embodiments, after the reception device obtains the object, the object is automatically displayed in the reception device.

Object transmission systems and methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an object transmission system of the invention;

Fig. 2 is a flowchart of an embodiment of operations on a transmission device of an object transmission method of the invention;

Fig. 3 is a flowchart of an embodiment of operations on a server of an object transmission method of the invention;

Fig. 4 is a flowchart of an embodiment of operations on a reception device of an object transmission method of the invention; and

Fig. 5 is a schematic diagram illustrating an embodiment of an example of displaying an object in a reception device of the invention.

### DETAILED DESCRIPTION OF THE INVENTION

Object transmission systems and methods are provided.

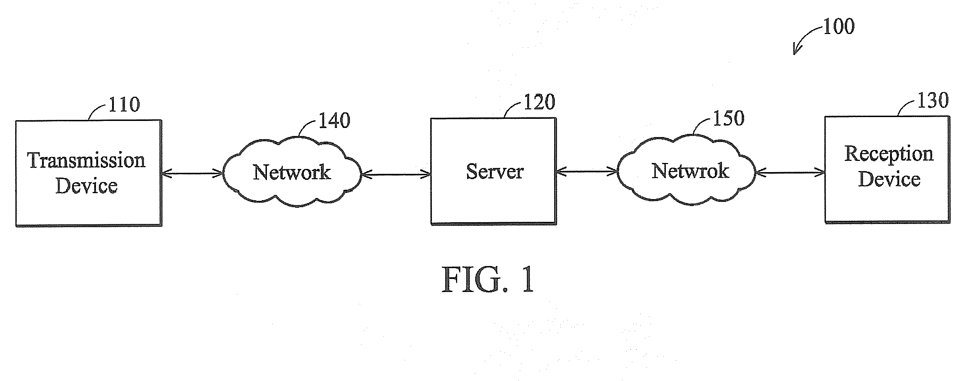

Fig. 1 is a schematic diagram illustrating an embodiment of an object transmission system of the invention.

As shown in Fig. 1, the object transmission system 100 comprises a transmission device 110, a server 120, and a reception device 130. The transmission device 110 and the reception device 130 may be a mobile device, such as a media player, a PDA (Personal Digital Assistant), a GPS (Global Positioning System) device, a touch-sensitive phone, a smart phone, and a mobile phone. The transmission device 110 and the reception device 130 respectively couple to the server 120 via networks 140 and 150, such as a wireless network or a telecommunication network. The transmission device 110 can transmit identification data of the reception device 130 and an object, such as an image to the server 120 via the network 140. The transmission device 110 and/or the server 120 can optionally perform an additional process to the object. The server 120 can dispatch the object to the reception device 130 according to the identification data of the reception device 130. The reception device 130 can obtain the object from the server 120 via the network 150, and automatically display the object. The detailed descriptions of the transmission device 110, the server 120, and the reception device 130 are discussed later.

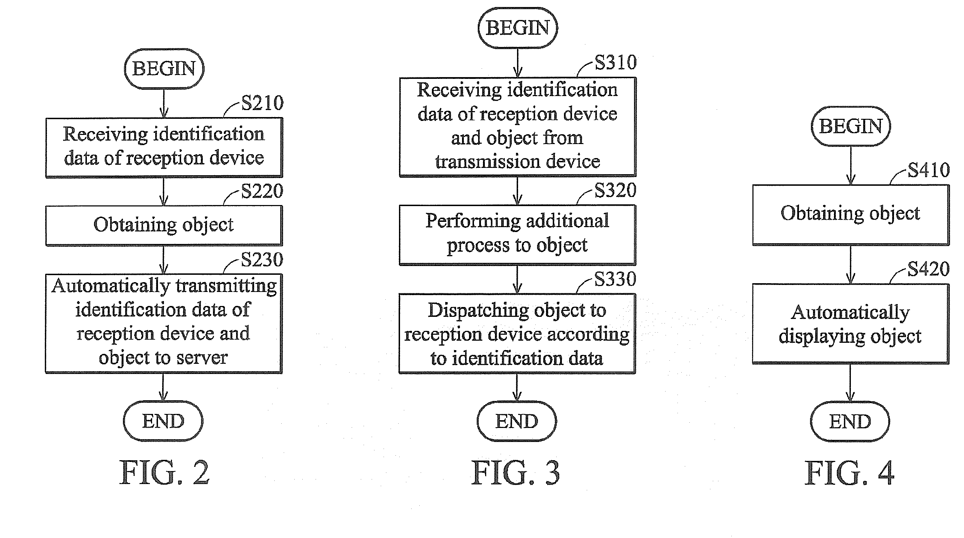

Fig. 2 is a flowchart of an embodiment of operations on a transmission device of an object transmission method of the invention.

In step S210, the transmission device 110 receives an input of identification data of the reception device 130. It is noted that, the identification data can be a phone number, a network address of the reception device 130, or account information such as an email address registered for the reception device 130. In step S220, the transmission device 110 obtains an object. It is understood that, in some embodiments, the object can already exist in the transmission device 110. In some embodiments, when the transmission device 110 has an image capture device, the object, such as an image can be captured by the image capture device. It is noted that, the order of steps S210 and S220 can be exchanged. Then, in step S230, the transmission device 110 automatically transmits the identification data of the reception device 130 and the object to the server 120 via the network 140, such as a wireless network or a telecommunication network. It is understood that, in some embodiments, when the identification data is a phone number, the transmission device 110 can first transform the phone number into the account information such as an email address for the reception device 130, and then transmit the account information with the object to the server 120 via the network 140. Additionally, in some embodiments, for some purposes, such as improvement of transmission efficiency between the transmission device 110 and the server 120, the transmission device 110 can perform an additional process to the object. In some embodiments, when the object is an image, the additional process can be adjustment for the size of the image, adjustment for the color or hue of the image, image cropping for a face or key portions in the image, and/or attachment of auxiliary data, such as related descriptions of the transmission device 110 to the image.

It is understood that, in some embodiments, the transmission device 110 may have a physical or logical hotkey to activate an object transmission function. When the object transmission function is activated, the transmission device 110 can display at least a prompt to assist users to perform the operations of input of identification data of the reception device 130 and the obtaining of objects. It is noted that, in some embodiments, a schedule time can be set in the transmission device 110, and when the schedule time is present, the operation of step S230 is performed to transmit the identification data of the reception device 130 and the object to the server 120. Additionally, in some embodiments, the transmission device 110 may have a storage unit (not shown). The storage unit may preset a predefined folder. When the schedule time is present, all objects in the predefined folder are automatically transmitted to the server 120.

Fig. 3 is a flowchart of an embodiment of operations on a server of an object transmission method of the invention.

In step S310, the server 120 receives the identification data of the reception device 130, such as a phone number, a network address, or account information such as an email address, and the object from the transmission device 110 via the network 140, such as a wireless network or a telecommunication network. It is understood that, in some embodiments, when the identification data is a phone number, the server 120 can transform the phone number into account information such as an email address for the reception device 130. Additionally, similarly, in some embodiments, when the identification data is a phone number, the transmission device 110 can first transform the phone number into account information such as an email address for the reception device 130, and then transmit the account information with the object to the server 120. For example, when the phone number of the reception device 130 is '0937111222', the server 120 or the transmission device 110 can transform the phone number into an email address '0937111222@photo.htc.com'. In step S320, the server 120 performs an additional process to the object. Similarly, when the object is an image, the additional process can be adjustment for the size of the image, adjustment for the color or hue of the image, image cropping for a face or key portions in the image, and/or attachment of auxiliary data, such as related descriptions of the transmission device 110 to the image. It is noted that the additional process in step S320 can be also performed in the transmission device 110. When the additional process is performed in the transmission device 110, step S320 can be omitted. Further, in some embodiments, when the transmission efficiency is not a main concern, the additional process for the object can be omitted. Then, in step S330, the server 120 dispatches the object to the reception device 130 according to the identification data of the reception device 130, such as the transformed account information (email address) or the network address. It is understood that, in some embodiments, the reception device 130 can actively connect to the server 120 or an email server providing services for the transformed email address to obtain the object via the network 150, such as a wireless network or a telecommunication network. In some embodiments, the server 120 can use a PUSH mechanism to push (transmit) the object to the reception device 130 via the network 150.

Fig. 4 is a flowchart of an embodiment of operations on a reception device of an object transmission method of the invention.

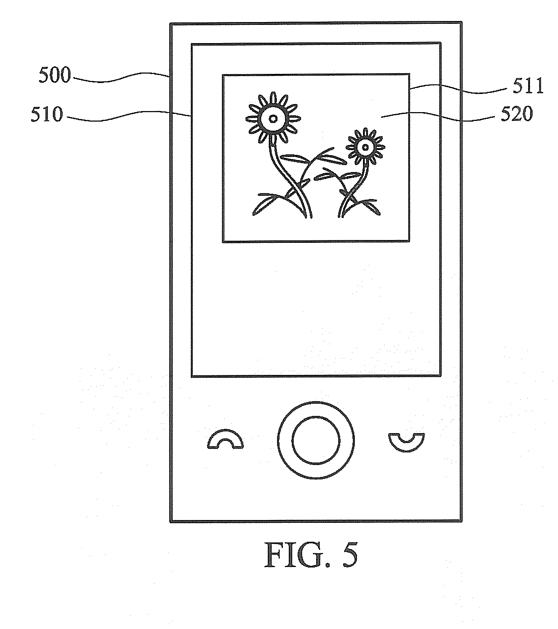

In step S410, the reception device 130 obtains the object from the server 120 via the network 150, such as a wireless network or a telecommunication network. As described, the reception device 130 can actively connect to the server 120 or an email server providing services for the transformed email address to obtain the object, or the server 120 can use a PUSH mechanism to push the object to the reception device 130. After the object is obtained, in step S420, the object is automatically displayed. In some embodiments, the object can be displayed in a screen of the reception device 130, displayed in a pop-up window in the screen, or displayed as a background of the screen. For example, Fig. 5 is a schematic diagram illustrating an embodiment of an example of displaying an object in a reception device of the invention. In this example, when the reception device 500 receives an object 520, such as an image, the object 520 is automatically displayed in a pop-up window 511 in a screen 510 of the reception device 500. It is noted that, in some embodiments, the reception device 130 can determine whether the object is received under the object transmission function. If so, the object is automatically displayed, thus providing convenience to view the object.

Therefore, the object transmission systems and methods can provide automatic and efficient mechanisms to upload and share objects to other devices.

Object transmission systems and methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. An object transmission system, comprising:
a transmission device receiving an input of identification data of a reception device, obtaining an object, and automatically transmitting the identification data of the reception device and the object; and
a server receiving the identification data of the reception device and the object from the transmission device, and dispatching the object to the reception device according to the identification data of the reception device.

2. The system of claim 1, wherein the reception device automatically displays the object after the object is received, and the object is displayed in a screen of the reception device, displayed in a pop-up window in the screen, or displayed as a background of the screen.

3. The system of claim 2, wherein the reception device actively connects to the server to obtain the object, or the server uses a push mechanism to push the object to the reception device.

4. The system of claim 1, wherein the transmission device further records a schedule time, and transmits the identification data of the reception device and the object to the server when the schedule time is present.

5. The system of claim 1, wherein the server or the transmission device further performs an additional process to the object, and the server dispatches the object to the reception device after the additional process to the object is completed.

6. The system of claim 1, wherein the identification data comprises a phone number of the reception device, and the server or the transmission device further transforms the phone number into account information registered for the reception device, and dispatches the object to the reception device according to the account information.

7. The system of claim 1, wherein the identification data comprises a network address, and the server dispatches the object to the reception device according to the network address.

8. The system of claim 1, wherein the object comprises an image, and the image is captured by an image capture device of the transmission device.

9. An object transmission method, comprising:
receiving an input of identification data of a reception device by a transmission device;
obtaining an object by the transmission device;
automatically transmitting the identification data of the reception device and the object to a server by the transmission device; and
dispatching the object to the reception device according to the identification data of the reception device by the server.

10. The method of claim 9, further comprising after the object is received by the reception device, automatically displaying the object by the reception device, wherein the object is displayed in a screen of the reception device, displayed in a pop-up window in the screen, or displayed as a background of the screen.

11. The method of claim 10, wherein the reception device actively connects to the server to obtain the object, or the server uses a push mechanism to push the object to the reception device.

12. The method of claim 9, further comprising transmitting the identification data of the reception device and the object to the server by the transmission device when a schedule time is present.

13. The method of claim 9, further comprising:
performing an additional process to the object by the server or the transmission device; and
dispatching the object to the reception device by the server after the additional process to the object is completed.

14. The method of claim 9, wherein the identification data comprises a phone number of the reception device, and the method further comprises the steps of:
transforming the phone number into account information registered for the reception device by the server or the transmission device; and
dispatching the object to the reception device according to the account information by the server.

15. The method of claim 9, wherein the identification data comprises a network address, and the server dispatches the object to the reception device according to the network address.
